# EUROPÄISCHE PATENTSCHRIFT

(11) **EP 0 870 930 B1**
(45) Veröffentlichungstag und Bekanntmachung des Hinweises auf die Patenterteilung: **18.07.2001**
(21) Anmeldenummer: 97120597.6
(22) Anmeldetag: 25.11.1997
(51) Int. Cl.: F15B 15/08

(54) **Linearantrieb**
Linear drive
Entraînement linéaire

(30) Priorität: 11.04.1997 DE 29706401 U
(43) Veröffentlichungstag der Anmeldung: 14.10.1998
(73) Patentinhaber: FESTO AG & Co, 73734 Esslingen (DE)
(72) Erfinder: Angué, Eric, 70469 Stuttgart (DE); Wagner, Albrecht, 73650 Winterbach (DE)
(74) Vertreter: Abel, Martin, Dipl.-Ing.

(56) Entgegenhaltungen:
- DE-A- 4 041 370
- GB-A- 2 258 771

## Beschreibung

Die Erfindung betrifft einen ein längliches Gehäuse aufweisenden Linearantrieb.

Ein Linearantrieb dieser Art geht aus dem deutschen Gebrauchsmuster G 94 16 523.8 hervor. Dieser ist als kolbenstangenloser Linearantrieb ausgeführt und enthält ein mit einem Längsschlitz versehenes extrudiertes Gehäuse, in dem ein von einem Kolben gebildetes Antriebsteil untergebracht ist, welches durch Fluidbeaufschlagung zu einer hin- und hergehenden Linearbewegung veranlaßt werden kann. Außen am Gehäuse befindet sich ein mit einer zu bewegenden Last koppelbarer Schlitten, der über einen den Längsschlitz durchgreifenden Mitnehmer mit dem Antriebsteil verbunden ist und an einer außen am Gehäuse festgelegten Führungsschiene läuft. Die Führungsschiene ist leistenförmig ausgeführt und mittels einer Reihe von Befestigungselementen an das Gehäuse angeschraubt.

Die Befestigungselemente der Führungsschiene dienen beim Stand der Technik auch zur Justierung am Gehäuse anzubringender Zusatzteile, beispielsweise der Halter von mit dem Schlitten zusammenwirkenden Anschlageinrichtungen. Im einzelnen werden dabei mit Hilfe der Befestigungsschrauben der Führungsschiene einzelne Abstützelemente festgelegt, mit denen der betreffende Halter zusammenarbeitet. Die Position der Abstützelemente gibt dabei die Position des Halters für die Anschlageinrichtung vor.

Ungeachtet der Präzision der beim Stand der Technik zum Anbringen eines Zusatzteils angewandten Maßnahmen ergibt sich doch eine gewisse Unzulänglichkeit dahingehend, daß lediglich auf ganz bestimmte, vorab festgelegte Befestigungspunkte zurückgegriffen werden kann, so daß dem Anwender des Linearantriebes darüberhinaus praktisch keine Variationsmöglichkeiten zur Verfügung stehen.

Es ist daher die Aufgabe der vorliegenden Erfindung, einen Linearantrieb zu schaffen, bei dem eine wesentlich flexiblere Anbringung von Zusatzteilen ermöglicht ist.

Zur Lösung dieser Aufgabe ist in der Wandung des Gehäuses mindestens ein umfangsseitig vollständig geschlossener, längsverlaufender Schraubkanal vorgesehen, der über zwei sich mit Abstand gegenüberliegende und rechtwinkelig zu einer äußeren Befestigungsfläche des Gehäuses verlaufende Kanalwände verfügt, die jeweils mit einer in Tiefenrichtung des Schraubkanals verlaufenden Verzahnung versehen sind, deren aufeinanderfolgende Erhebungen und Vertiefungen sich in Längsrichtung des Schraubkanals erstrecken, und der von der Seite der Befestigungsfläche her anbohrbar ist, um in ihn eine Befestigungsschraube eindrehen zu können.

Auf diese Weise besteht eine einfache Möglichkeit zur stufenlosen Positionierung von am Gehäuse anzubringenden Zusatzteilen beliebiger Art. Soll an einer ausgewählten Längsposition entlang einer vom Schraubkanal vorgegebenen Strecke außen am Gehäuse ein Zusatzteil angebracht werden, beispielsweise ein mit einem Schlitten des Linearantriebes zusammenwirkender Anschlag, so läßt sich ein geeigneter Befestigungspunkt einfach dadurch definieren, daß der Schraubkanal von der Befestigungsfläche her angebohrt und somit lokal geöffnet wird, wobei über die Bohrung hindurch eine Befestigungsschraube in dem Schraubkanal verankert werden kann. Die sich gegenüberliegenden Verzahnungen können sich dabei zur einer Art Gewinde ergänzen, in das sich die Befestigungsschraube einschrauben läßt, wobei je nach Ausgestaltung der Verzahnungen eine Anpassung dahingehend vorgenommen sein kann, daß wahlweise konventionelle Schrauben oder sogenannte selbstschneidende Schrauben verankert werden können.

Ein Vorteil der erfindungsgemäßen Ausgestaltung besteht auch darin, daß der Anwender des Linearantriebes nachträglich noch die Möglichkeit hat, durch Aufbohren des Schraubkanals an geeigneten Stellen erforderliche Befestigungspunkte zu definieren. Auch ergibt sich im Vergleich zu einer Vielzahl vorgefertigter Befestigungsbohrungen der Vorteil, daß keine Schmutznester entstehen oder alternativ aufwendige Abdeckmaßnahmen bezüglich nicht verwendeter Befestigungsbohrungen erforderlich sind.

Zwar sind sogenannte Schraubkanäle als solches bereits Stand der Technik und gehen beispielsweise aus der Zeitschrift "VDI-Z, Entwicklung, Konstruktion, Produktion, Band 128, 1986, Nr. 10, Seite 75" hervor. Damit vergleichbare Schraubkanäle sind ausweislich der DE 40 41 370 A1 auch schon an der Außenfläche des Gehäuses eines Linearantriebes vorgesehen worden. Stets handelt es sich dabei allerdings um einen über seine gesamte Länge zur Befestigungsfläche hin offenen Schraubkanal. Im Vergleich dazu ergeben sich bei der erfindungsgemäßen Ausgestaltung die schon erwähnten Vorteile bezüglich der Verschmutzungsanfälligkeit und es wird ferner die Festigkeit des Gehäuses des Linearantriebes nicht beeinträchtigt, so daß vor allem die Biegesteifigkeit erhalten bleibt. Letzteres ist vor allem dann wichtig, wenn es sich um einen durch Fluidkraft betriebenen Linearantrieb handelt, der einen mit hohem Druck beaufschlagten Gehäuseinnenraum aufweist

Vorteilhafter Weiterbildungen der Erfindung gehen aus den Unteransprüchen hervor.

Das Setzen der gewünschten Befestigungsbohrungen kann beispielsweise unter Zuhilfenahme einer angepaßten Bohrschablone geschehen. Wesentlich einfacher gestalten sich die Bohrarbeiten jedoch, wenn an der Befestigungsfläche eine sich parallel zum Schraubkanal erstreckende und in einer den Schraubkanal in Tiefenrichtung durchsetzenden Ebene verlaufende Bohrmarkierung vorgesehen ist, die beispielsweise von einer rillen- oder nutartigen Längsvertiefung gebildet sein kann. Auf diese Weise ist trotz nicht sichtbarem Schraubkanal jederzeit von außen her erkennbar, wo eine Bohrung angebracht werden kann, um genau mittig auf den Schraubkanal zu treffen und ein nachfolgendes problemloses Einschrauben einer Befestigungsschraube zu ermöglichen.

Verfügt der Linearantrieb über eine am Gehäuse angeordnete und insbesondere bei einer Strangpreßherstellung des Gehäuses unmittelbar mit angeformte Führungsschiene, wird es als vorteilhaft angesehen, den Schraubkanal im Bereich der Führungsschiene vorzusehen. Die Ausgestaltung kann insbesondere so getroffen sein, daß die Befestigungsfläche von der vom Gehäuse wegweisenden Außenfläche der Führungsschiene gebildet ist.

Im übrigen sei ergänzend darauf hingewiesen, daß eine beim Extrudieren des Gehäuses unmittelbar an das Gehäuse angeformte und dadurch einen einstückigen Bestandteil des Gehäuses bildende Führungsschiene auch dann vorteilhaft ist, wenn das Gehäuse keinen Schraubkanal der oben beschriebenen Art umfaßt. Durch die entsprechende Maßnahme bilden das Gehäuse und die Führungsschiene eine integrale Baueinheit, wobei die Herstellung durch ein entsprechend gestaltetes Extrudierwerkzeug auf verhältnismäßig einfache Weise bewerkstelligt werden kann. Da bei der Herstellung auch ein ein Antriebsteil des Linearantriebes aufnehmender Gehäuseraum im Innern des Gehäuses eingeformt werden kann, erreicht man eine exakte Parallelität zwischen den Längsachsen des Gehäuseinnenraumes und der Führungsschiene, die im Betrieb einen exakten Gleichlauf von Antriebsteil und Schlitten gewährleistet. Das aufwendige nachträgliche Anschrauben der Führungsschiene an das Gehäuse entfällt, ebenso die umständlichen Justierungen.

Die Führungsschiene kann über zwei einander entgegengesetzt ausgerichtete seitliche Flanken verfügen, an denen Führungsbahnen für einen mit einem Antriebsteil des Linearantriebes axial bewegungsgekoppelten Schlitten vorgesehen sind. Diese Führungsbahnen können unmittelbar von seitlichen, längsverlaufenden Flächen der Führungsschiene gebildet sein. Dies insbesondere dann, wenn zwischen dem Schlitten und der Führungsschiene eine Gleitführung vorliegt, bei der am Führungsschlitten befestigte Gleitbacken an den Führungsbahnen der Führungsschiene entlanglaufen.

Speziell in Fällen, in denen zwischen dem Schlitten und der Führungsschiene eine Wälzführung vorgesehen ist, kann es von Vorteil sein, die Führungsschiene mit separaten, aus verschleißfesterem Material bestehenden Führungselementen zu bestücken, wobei sich aus gehärtetem Stahl bestehende stabförmige Führungselemente anbieten, die beispielsweise durch Einwalzen in seitlichen Längsnuten der Führungsschiene unlösbar festgelegt sein können.

Verfügt der Linearantrieb über ein als extrudiertes Bauteil ausgeführtes längliches Gehäuse, ist es von Vorteil, wenn der Schraubkanal unmittelbar bei der Strangpreß-Fertigung des Gehäuses mit eingeformt wird, insbesondere gleichzeitig mit der Anformung einer Führungsschiene.

Nachfolgend wird die Erfindung anhand der beiliegenden Zeichnung näher erläutert.

Es zeigen im einzelnen:
- Figur 1:: ein erstes Ausführungsbeispiel des erfindungsgemäßen Linearantriebes in perspektivischer Darstellung,
- Figur 2:: einen Querschnitt durch den Linearantrieb gemäß Schnittlinie II - II aus Figur 1, und
- Figur 3:: einen Ausschnitt des Linearantriebes aus Figur 2 im Bereich der Führungsschiene bei angebohrtem Schraubkanal und in einer abgewandelten Ausführungsform der Führungsbahnen, die im Vergleich zur Figur 2 von nachträglich angebrachten stabförmigen Führungselementen gebildet sind.

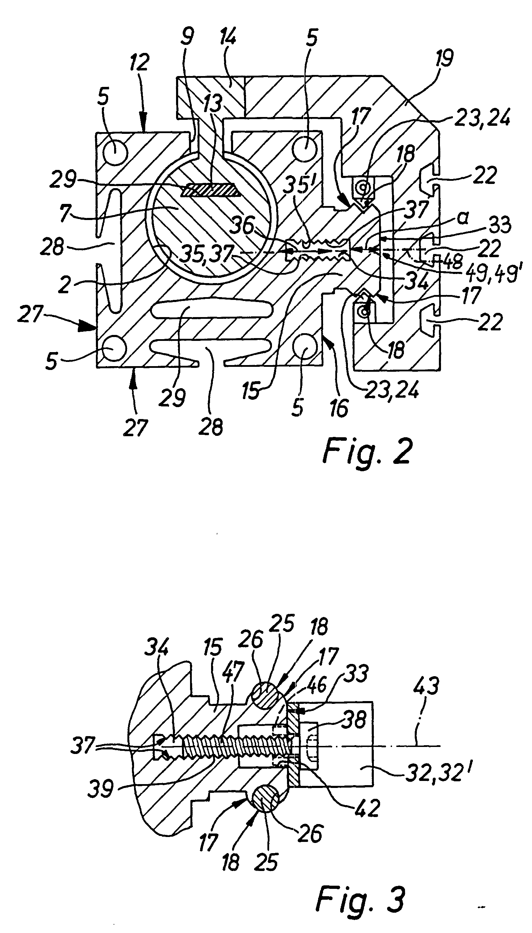

Der Linearantrieb des Ausführungsbeispiels ist als sogenannter kolbenstangenloser Linearantrieb ausgebildet, der durch Fluidkraft und insbesondere pneumatisch betätigt wird. Er verfügt über ein langgestrecktes extrudiertes bzw. stranggepreßtes Gehäuse 1 das im Innern einen aus Figur 2 näher ersichtlichen Gehäuseinnenraum 2 aufweist. Der Gehäuseinnenraum 2 ist zylindrisch und insbesondere kreiszylindrisch konturiert und erstreckt sich in Längsrichtung 4 des Gehäuses 1. Stirnseitig ist der Gehäuseinnenraum 2 durch Abschlußdeckel 3 verschlossen, die wie abgebildet stirnseitig an das Gehäuse 1 angeschraubt sein können. Um die Befestigung zu vereinfachen, kann das Gehäuse 1 über beim Extrudieren eingeformte durchgehende Längskanäle 5 verfügen, in die sich insbesondere selbstschneidende Befestigungsschrauben 6 eindrehen lassen, die am Abschlußdeckel 3 angreifen.

Die Abschlußdeckel 3 könnten auch von der Stirnseite her in den Gehäuseinnenraum 2 eingesetzt sein.

In dem Gehäuseinnenraum 2 ist ein Antriebsteil 7 in Längsrichtung 4 hin und her bewegbar aufgenommen. Es ist beim Ausführungsbeispiel als Kolben ausgeführt, der mittels umlaufender Dichtungen zur Innenwand des Gehäuseinnenraumes 2 hin abgedichtet ist und letzteren in zwei Arbeitskammern unterteilt, die nach Bedarf mit Druckmedium beaufschlagbar oder entlüftbar sind. Auf diese Weise kann das Antriebsteil 7 zu einer in Längsrichtung 4 verlaufenden Linearbewegung gemäß der durch Doppelpfeil 8 angedeuteten Bewegungsrichtung veranlaßt werden.

Das Gehäuse 1 verfügt beim Ausführungsbeispiel im Querschnitt gesehen über eine rechteckige und vorzugsweise quadratische Außenkontur. An einer Stelle seines Umfanges ist das Gehäuse 1 mit einem in Längsrichtung verlaufenden Längsschlitz 9 versehen, der radial innen in den Gehäuseinnenraum 2 und radial außen zu einer Außenfläche 12 des Gehäuses 1 ausmündet. Außen ist er durch ein Abdeckband 10 überdeckt. Der radialen Innenseite des Längsschlitzes 9 ist ein flexibles Dichband 13 zugeordnet, das für eine fluiddichte Abdichtung der beiden Arbeitskammern sorgt und im drucklosen Bereich des Antriebsteils 7 vom Längsschlitz abgehoben ist, um einem am Antriebsteil 7 festgelegten Mitnehmer 14 den Durchtritt durch den Längsschlitz 9 hindurch nach außen zu ermöglichen.

Außen am Gehäuse 1 ist eine in Längsrichtung 4 verlaufende erhabene Führungsschiene 15 angeordnet. Sie sitzt an einer der Außenflächen des Gehäuses 1 und beispielsgemäß an einer Außenfläche 16, die sich an die vom Längsschlitz 9 durchsetzte Außenfläche 12 anschließt und rechtwinkelig zu dieser verläuft. Bevorzugt erstreckt sich die Führungsschiene 15 mittig bezogen auf die zugeordnete Außenfläche 16.

Die Führungsschiene 15 ist einstückig mit dem Gehäuse 1 ausgebildet, so daß ein sich aus dem Gehäuse 1 und der Führungsschiene 15 zusammensetzendes integrales Bauteil vorliegt. Die Formgebung der Führungsschiene 15 ist unmittelbar beim Extrudieren des Gehäuses 1 erfolgt, so daß insbesondere der Gehäuseinnenraum 2 und die Führungsschiene 15 gleichzeitig bei der Strangpreßherstellung erzeugt wurden. Auf diese Weise ist eine exakte Parallellage der Längsachsen des Gehäuseinnenraumes 2 und der Führungsschiene 15 gewährleistet.

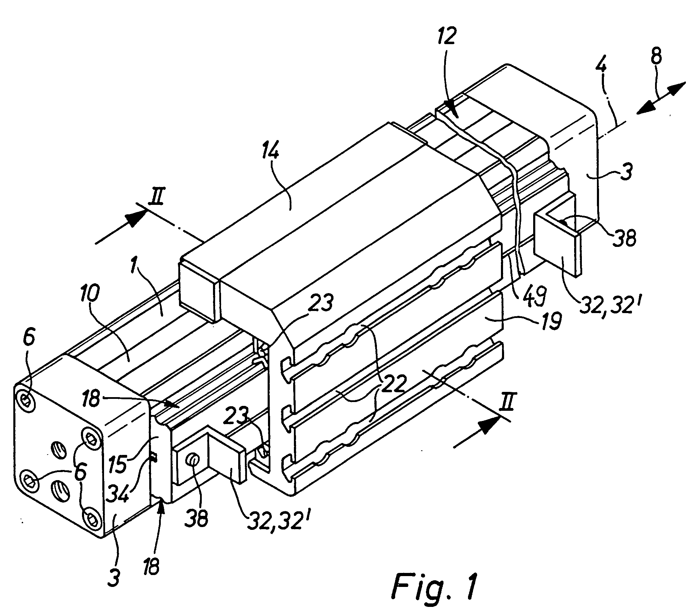

Beim Ausführungsbeispiel der Figuren 1 und 2 sind unmittelbar bei der Extrusionsherstellung an den beiden einander entgegengesetzten seitlichen Flanken 17 der Führungsschiene 15 Führungsbahnen 18 angeformt. Die Führungsbahnen 18 sind also unmittelbar von den seitlichen längsverlaufenden Flächen der Führungsschiene 15 gebildet. Dabei können die Führungsbahnen wie abgebildet in Gestalt nutartiger Vertiefungen ausgeführt sein, die sich über die Länge der Führungsschiene 15 erstrecken. Beim Ausführungsbeispiel haben diese Vertiefungen einen V-ähnlichen Querschnitt.

An der Führungsschiene 15 ist ein mit dem Antriebsteil 7 axial bewegungsgekoppelter Schlitten 19 längsbeweglich geführt und in Querrichtung abgestützt angeordnet. Die Bewegungskopplung erfolgt über den Mitnehmer 14, der sowohl an dem Antriebsteil 7 als auch an dem Schlitten 19 angreift. Bei der schon erwähnten angetriebenen Verlagerung des Antriebsteils 7 führt somit der Schlitten 19 eine synchrone gleichgerichtete Linearbewegung in der Bewegungsrichtung 8 aus. Auf diese Weise läßt sich ein in der Zeichnung nicht näher dargestellter und fest mit dem Schlitten 19 verbundener Gegenstand transportieren und wunschgemäß positionieren. An dem Schlitten 19 vorgesehene Befestigungsmittel 22 erlauben die lösbare Anbringung des zu verlagernden Gegenstandes.

Da der Schlitten 19 an der Führungsschiene 15 geführt ist, bleibt das Antriebsteil 7 weitestgehend frei von Querkräften, die auf das Gewicht der vom Schlitten zu transportierenden Last zurückzuführen sind. Wegen der Kopplung zwischen Schlitten 19 und Antriebsteil 7 ist allerdings eine möglichst exakte Parallelität zwischen der Längserstreckung der Führungsschiene 15 und des Gehäuseinnenraumes 2 angestrebt, um reibungsbedingten hohen Verschleiß zu reduzieren. In Folge der gleichzeitigen Extrusionsfertigung und der darauf zurückzuführenden gleichzeitigen Formgebung des Gehäuseinnenraumes 2 und der Führungsschiene 15 ist vorliegend die gewünschte präzise Parallelität gewährleistet. Es kann auf diese Weise in aller Regel auf eine zusätzliche Ausgleichsvorrichtung in der Verbindung zwischen dem Schlitten 19 und dem Antriebsteil 7 verzichtet werden, die in Querrichtung eine gewisse Entkoppelung bietet und geringfügige relative Querbewegung zwischen den beiden vorgenannten Bauteilen ermöglicht. Dies ist ein weiterer Faktor, der zur Reduzierung der Gestehungskosten des Linearantriebes beiträgt.

Die Kooperation zwischen dem Schlitten 19 und den Führungsbahnen 18 geschieht mittels an dem Schlitten 19 vorgesehener Führungspartien 23 wobei es sich zweckmäßigerweise um separate, lösbar am Schlitten 19 festgelegte Bauteile handelt. Sie sind beim Ausführungsbeispiel der Figuren 1 und 2 als Gleitbacken oder Gleitelemente 24 ausgeführt, die in die seitlichen nutartigen Vertiefungen der Führungsschiene 15 eingreifen und gleitend an den Führungsbahnen 18 anliegen. Auf diese Weise liegt eine kostengünstige Gleitführung vor.

Bei dem etwas abgewandelten Ausführungsbeispiel der Figur 3 sind die Führungsbahnen 18 nicht unmittelbarer Bestandteil der Führungsschiene 15, sondern jeweils von einem längsverlaufenden Flächenabschnitt eines stabförmigen Führungselementes 25 gebildet, das an jeweils einer der beiden Flanken 17 der Führungsschiene 15 festgelegt ist.

Bevorzugt sind die Führungselemente 25 als Rundstäbe ausgebildet und bestehen aus gehärtetem Stahl. Ihre Befestigung an der Führungsschiene 15 erfolgt vorzugsweise schraubenlos, wobei sie zweckmäßigerweise in längsverlaufende Nuten 26 der Führungsschiene 15 unlösbar fest eingewalzt sein können. Diese Ausführungsform bietet sich insbesondere dann an, wenn zwischen dem Schlitten 19 und der Führungsschiene 15 in Folge hoher Beanspruchung eine Wälzführung gewünscht ist, bei der die Führungspartien 23 von an den Führungsbahnen 18 rollenden Wälzelementen gebildet sind.

An den bisher noch nicht erwähnten beiden anderen Außenflächen 27 des extrudierten Gehäuses 1 können unmittelbar beim Extrudieren eingeformte Verankerungsnuten 28 vorgesehen sein, die das Festlegen von Zusatzteilen unter Verwendung von Nutensteinen ermöglichen.

Bei dem Linearantrieb kann es sich im übrigen auch um einen elektrisch betätigten Linearantrieb handeln, in welchem Falle das Antriebsteil 7 beispielsweise nach Art eine Mutter ausgeführt sein kann, die auf einer den Gehäuseinnenraum 2 in Längsrichtung durchsetzenden und von einem Elektromotor angetriebenen Spindel gebildet ist. Auch könnte der Mitnehmer an einem in sich geschlossenen band- oder seilartigen Zugelement angeordnet sein, das um im Bereich der Abschlußdeckel 3 angeordnete Umlenkelemente umläuft. Man erkennt in Figur 2 bei 29 einen in Längsrichtung verlaufenden durchgehenden Flachkanal, der geeignet wäre, eines der Trume des Zugelementes aufzunehmen.

Der Linearantrieb verfügt über eine weitere vorteilhafte Maßnahme, die im Bereich der Führungsschiene 15 das Anbringen von Zusatzteilen 32 außen am Gehäuse 1 vereinfacht.

Aus Figur 3 geht ein Zusatzteil 32 hervor, das an eine Befestigungsfläche 33 außen am Gehäuse 1 angesetzt und festgelegt ist. Dieses Zusatzteil 32 ist beim Ausführungsbeispiel als Anschlag 32' ausgebildet, der in den Verlagerungsweg des Schlittens 19 ragt und dazu dient, eine Endlage der Bewegung des Schlittens 19 vorzugeben. Gemäß Figur 1 befindet sich zweckmäßigerweise axial beidseits des Schlittens 19 jeweils ein solches Zusatzteil 32, insbesondere in der Nähe der Stirnseiten des Gehäuses 1. Auf diese Weise kann extern der Hub des Schlittens 19 vorgegeben werden.

Regelmäßig ist bei Auslieferung des Linearantriebes ab Werk noch nicht bekannt, in welchem Hubbereich der Schlitten 19 vom Kunden betrieben wird. Der Linearantrieb bietet nun die vorteilhafte Möglichkeit, die Anschläge 32' oder beliebige sonstige Zusatzteile 32 nachträglich stufenlos an jeder gewünschten Längsposition entlang des Gehäuses 1 festzulegen. Erreicht wird dies dadurch, daß in der Wandung des Gehäuses 1 ein umfangsseitig geschlossener längsverlaufender Schraubkanal 34 ausgebildet ist der unmittelbar bei der Extrusionsfertigung des Gehäuses 1 eingebracht wird und wie der Gehäuseinnenraum 2 an beiden Stirnseiten des Gehäuses 1 ausmündet. Er befindet sich in der Nachbarschaft der Befestigungsfläche 33 mit einem Abstand "a" von der Befestigungsfläche 33 im Innern der Gehäusewandung. Er ist bevorzugt als im wesentlichen rechteckähnlich konturierter Kanal ausgeführt und verfügt über zwei sich gegenüberliegende und rechtwinkelig zu der äußeren Befestigungsfläche 33 verlaufende Kanalwände 35, 35', die sich mit Abstand gegenüberliegen. In jeder Kanalwand 35, 35' ist eine in Tiefenrichtung gemäß Doppelpfeil 36 des Schraubkanals 34 und somit rechtwinkelig zur Befestigungsfläche 33 verlaufende Verzahnung 37 vorgesehen, deren in Tiefenrichtung 36 aufeinanderfolgend angeordnete Erhebungen und Vertiefungen sich in Längsrichtung des Schraubkanals 34 erstrecken. Die Anordnung kann zweckmäßigerweise so getroffen sein, daß die beiden Verzahnungen 37 in Tiefenrichtung 36 geringfügig versetzt zueinander angeordnet sind, wobei insbesondere jeder Vertiefung der einen Verzahnung 37 eine Erhebung der anderen Verzahnung 37 gegenüberliegt.

Die beiden Verzahnungen 37 bilden gemeinsam ein Gewinde, das es ermöglicht, in Tiefenrichtung eine Befestigungsschraube 38 einzudrehen, die mit ihrem Gewinde 39 gleichzeitig in die beiden Verzahnungen 37 eingreift. Handelt es sich bei der Befestigungsschraube um einen Typ mit selbstschneidendem Gewindeschaft, können die Verzahnungen ohne weiteres auch weniger stark ausgeprägt sein.

Der Betreiber des Linearantriebes hat nunmehr die Möglichkeit, an jeder gewünschten Stelle entlang der sich über die Länge des Gehäuse 1 erstreckenden Befestigungsfläche 33 eine als Verbindungsbohrung 42 bezeichnete Bohrung einzubringen, die so plaziert wird, daß ihre Längsachse 43 breitenmittig auf die zugewandte Querflanke 44 des Schraubkanals 34 trifft, die sich zwischen den beiden Kanalwänden 35, 35' erstreckt. Die Bohrungstiefe wird dabei etwas größer als der Abstand "a" gewählt, so daß der Schraubkanal 34 durch Anbohren lokal geöffnet wird.

Anschließend kann die Befestigungsschraube 38 von außen her durch die Verbindungsbohrung 42 in den Schraubkanal 34 eingeschraubt werden, wobei sie in die gewindeartig zusammenwirkenden Verzahnungen 37 eingreift. Somit kann der Anschlag 32' an der Befestigungsfläche 33 festgespannt werden.

Das vom Ausführungsbeispiel als Anschlag 32' ausgebildete Zusatzteil 32 kann einen in Figur 3 gestrichelt angedeuteten ringförmigen Fortsatz 46 aufweisen, der bei an die Befestigungsfläche 33 angesetztem Zusatzteil 32 in die Verbindungsbohrung 42 eintaucht, so daß in der Ebene der Befestigungsfläche 33 eine zusätzliche formschlüssige Abstützung des Zusatzteils 32 bezüglich dem Gehäuse 1 des Linearantriebes erreicht wird. Auch bei starkem Aufprall des Schlittens 19 wird dadurch einem unerwünschten Verschieben des Anschlages 32' relativ zum Gehäuse 1 entgegengewirkt. Insbesondere in einem derartigen Fall ist es von Vorteil, wenn die Verbindungsbohrung 42 einen Durchmesser aufweist, der größer als die rechtwinkelig zur Tiefenrichtung 36 gemessene Breite des Schraubkanals 34 ist, so daß die Befestigungsschraube 38 mit ihrem das Gewinde 39 aufweisenden Befestigungsschaft 47 durch eine von dem Fortsatz 46 umgrenzte Durchbrechung des Zusatzteils 32 durchführbar ist.

Im übrigen kann es sich bei dem Zusatzteil 32 beispielsweise auch um ein reines Abstützteil handeln, das gehäusefest fixiert wird und zur Abstützung eines insbesondere auf andere Weise am Gehäuse 1 angeordneten Anschlages dient. Der Anschlag kann hier beispielsweise auf die Führungsschiene aufgesetzt und klemmend an dieser fixiert sein.

Beim Ausführungsbeispiel ist vorgesehen, daß die Befestigungsfläche 33 von der vom Gehäuse 1 wegweisenden Außenfläche der Führungsschiene 15 gebildet ist. Der Schraubkanal 34 erstreckt sich dabei zweckmäßigerweise zumindest über einen Abschnitt seiner Tiefe innerhalb der Führungsschiene 15. Durch Bereitstellung einer Bohrschablone, die reiterähnlich auf die Führungsschiene 15 aufsetzbar ist, läßt sich sehr einfach gewährleisten, daß beim nachträglichen Setzen der Verbindungsbohrungen 42 der in der Regel recht schmale Schraubkanal 34 tatsächlich auch zentrisch getroffen wird.

Eine vorteilhafte Alternative zu dem unter Verwendung einer Bohrschablone realisierten, exakt kanalmittigen Setzen der Verbindungsbohrung 42 wird beim Ausführungsbeispiel dadurch ermöglicht, daß an der Befestigungsfläche 33 eine sich parallel zum Schraubkanal 34 erstreckende und zugleich in einer den Schraubkanal 34 in Tiefenrichtung 36 durchsetzenden Ebene 48 verlaufende Bohrmarkierung 49 vorgesehen ist. Die Ebene 48 verläuft rechtwinkelig zu der beim Ausführungsbeispiel ebenen Befestigungsfläche 33 und dabei zugleich parallel zur Ausdehnungsebene der beiden Verzahnungen 37, wobei. sie den Schraubkanal 34 mit gleichem Querabstand zu beiden Verzahnungen 37 mittig durchsetzt.

Es kann nun an beliebiger Stelle entlang der sich zweckmäßigerweise über die gesamte Länge des Schraubkanals 34 erstreckenden Bohrmarkierung 49 eine Bohrung eingebracht werden, die, wenn sie rechtwinkelig zur Befestigungsfläche 33 verläuft, mit Sicherheit zentral breitenmittig auf die Schmalseite des Schraubkanals 34 trifft, so daß ein fluchtender Übergang vorliegt, der ein problemloses Einschrauben der Befestigungsschraube ermöglicht.

Die Bohrmarkierung 49 ist vorzugsweise durchgehend mit linearer Erstreckung ausgeführt. Prinzipiell würde es bereits ausreichen, sie als farblich abgesetzte Markierungslinie auszugestalten. Erheblich vorteilhafter, weil sich dadurch die Spitze eines Bohrers exakt zentriert ansetzen läßt, ist die beim Ausführungsbeispiel vorgesehene Ausgestaltung als rillen- oder nutartige Längsvertiefung 49'. Diese hat zweckmäßigerweise ein keilförmiges Querschnittsprofil und verjüngt sich ausgehend von der Befestigungsfläche 33 in Tiefenrichtung zum Schraubkanal 34 hin.

Die Bohrmarkierung 49 kann vorteilhafterweise unmittelbar bei der durch Extrudieren erfolgenden Herstellung des Gehäuses 1 mit eingeformt werden. Da hierbei auch gleichzeitig der Schraubkanal 34 eingebracht werden kann, läßt sich sehr einfach eine überaus exakte Parallellage zwischen der Bohrmarkierung 49 und dem Schraubkanal 34 realisieren.

Es versteht sich, daß das Gehäuse des Linearantriebes nach Bedarf auch über mehrere Schraubkanäle der beschriebenen Art verfügen kann. Auf diese Weise kann gewährleistet werden, daß Zusatzteile an unterschiedlichen Stellen des Umfanges des Gehäuses unabhängig voneinander befestigt werden können. Auch kann bei entsprechender Ausgestaltung ein und dasselbe Zusatzteil gleichzeitig in mehreren Schraubkanälen fixiert sein.

Das Gehäuse 1 des Linearantriebes besteht zweckmäßigerweise aus Aluminiummaterial.

## Patentansprüche

1. Linearantrieb, mit einem länglichen Gehäuse (1), in dessen Wandung mindestens ein umfangsseitig vollständig geschlossener, längsverlaufender Schraubkanal (34) ausgebildet ist, der über zwei sich mit Abstand gegenüberliegende und rechtwinkelig zu einer äußeren Befestigungsfläche (33) des Gehäuses (1) verlaufende Kanalwände (35, 35') verfügt, die jeweils mit einer in Tiefenrichtung (36) des Schraubkanals (34) verlaufenden Verzahnung (37) versehen sind, deren aufeinanderfolgende Erhebungen und Vertiefungen sich in Längsrichtung des Schraubkanals (34) erstrecken, und der von der Seite der Befestigungsfläche (33) her anbohrbar ist, um in ihn eine Befestigungsschraube (38) eindrehen zu können.

2. Linearantrieb nach Anspruch 1, dadurch gekennzeichnet, daß an der Befestigungsfläche (33) eine sich parallel zum Schraubkanal (34) erstreckende und in einer den Schraubkanal (34) in Tiefenrichtung (36) durchsetzenden Ebene (48) verlaufende Bohrmarkierung (49) vorgesehen ist.

3. Linearantrieb nach Anspruch 2, dadurch gekennzeichnet, daß die Bohrmarkierung (49) von einer rillen- oder nutartigen Längsvertiefung (45') gebildet ist.

4. Linearantrieb nach einem der Ansprüche 1 bis 3, dadurch gekennzeichnet, daß das Gehäuse (1) als extrudiertes Bauteil ausgeführt ist.

5. Linearantrieb nach einem der Ansprüche 1 bis 4, dadurch gekennzeichnet, daß in dem Gehäuse (1) ein längsbewegbares Antriebsteil (7) angeordnet ist und außen am Gehäuse (1) eine in Längsrichtung (4) verlaufende erhabene Führungsschiene (15) vorgesehen ist, an der ein mit dem Antriebsteil (7) axial bewegungsgekoppelter Schlitten (19) längsbeweglich geführt ist.

6. Linearantrieb nach Anspruch 5, dadurch gekennzeichnet, daß die Führungsschiene (15) ein beim Extrudieren des Gehäuses (1) unmittelbar mit angeformter einstückiger Bestandteil des Gehäuses (1) ist.

7. Linearantrieb nach Anspruch 5 oder 6, dadurch gekennzeichnet, daß der Schlitten (19) mit an den beiden seitlichen Flanken (17) der Führungsschiene (15) vorgesehenen Führungsbahnen (18) zusammenarbeitet, die unmittelbar von den seitlichen, längsverlaufenden Flächen der Führungsschiene (15) gebildet sind.

8. Linearantrieb nach Anspruch 5 oder 6, dadurch gekennzeichnet, daß der Schlitten (19) mit an den beiden seitlichen Flanken (17) der Führungsschiene (15) vorgesehenen Führungsbahnen (18) zusammenarbeitet, die von beidseits an der Führungsschiene (15) festgelegten, insbesondere aus gehärtetem Stahl bestehenden stabförmigen Führungselementen (25) gebildet sind.

9. Linearantrieb nach Anspruch 8, dadurch gekennzeichnet, daß die Führungselemente (25) insbesondere durch Einwalzen in Längsnuten (26) der Führungsschiene (15) festgelegt sind.

10. Linearantrieb nach einem der Ansprüche 1 bis 9, dadurch gekennzeichnet, daß das Gehäuse (1) einschließlich der gegebenenfalls vorhandenen Führungsschiene (15) aus Aluminiummaterial besteht.

11. Linearantrieb nach einem der Ansprüche 5 bis 10, dadurch gekennzeichnet, daß ein Schraubkanal (34) im Bereich der Führungsschiene (15) angeordnet ist.

12. Linearantrieb nach Anspruch 11, dadurch gekennzeichnet, daß die Befestigungsfläche (33) von der vom Gehäuse (1) wegweisenden Außenfläche der Führungsschiene (15) gebildet ist.

13. Linearantrieb nach einem der Ansprüche 1 bis 12, dadurch gekennzeichnet, daß er als kolbenstangenloser Linearantrieb ausgebildet ist, wobei das Gehäuse (1) einen Längsschlitz (9) aufweist, der von einem das Antriebsteil (7) mit dem Schlitten (19) verbindenden Mitnehmer (14) durchsetzt ist.

14. Linearantrieb nach Anspruch 13, dadurch gekennzeichnet, daß das Gehäuse (1) im Querschnitt gesehen eine rechteckförmige und insbesondere quadratische Außenkontur aufweist, wobei sich die Führungsschiene (15) an einer der beiden Außenflächen befindet,die rechtwinkelig zu der vom Längsschlitz (9) durchsetzten Außenfläche (12) verlaufen.

## Claims

1. Linear drive with an oblong housing (1), in the walls of which are formed one or more longitudinal screw passages (34), completely closed around the circumference, and having two opposing passage walls (35, 35'), spaced apart and running at right-angles to an external fastening surface (33) of the housing (1), each provided with a tooth system (37) running in the longitudinal direction (36) of the screw passage (34) and with elevations and recesses extending in the axial direction of the screw passage (34), and which may be spot-drilled from the side of the fastening surface (33), so that a fixing screw (38) can be turned into it.

2. Linear drive according to claim 1, characterized in that there is provided on the fastening surface (33) a drilling mark (49) extending parallel to the screw passage (34) and running in a plane (48) which passes through the screw passage (34) in the longitudinal direction (36).

3. Linear drive according to claim 2, characterized in that the drilling mark (49) is formed by a channel- or slot-like longitudinal recess (45').

4. Linear drive according to any of claims 1 to 3, characterized in that the housing (1) is made as an extruded part.

5. Linear drive according to any of claims 1 to 4, characterized in that an axially-movable drive section (7) is located in the housing (1), and a raised guide rail (15) running in the longitudinal direction (4) is provided on the outside of the housing (1) for guidance with longitudinal movement facility of a slide (19) which is axially motion-coupled to the drive section (7).

6. Linear drive according to claim 5, characterized in that the guide rail (15) is an integral one-piece component of the housing (1), produced directly as the housing (1) is extruded.

7. Linear drive according to claim 5 or 6, characterized in that the slide (19) acts in conjunction with tracks (18) provided on the two side flanks (17) of the guide rail (15) and formed directly by the longitudinal side faces of the guide rail (15).

8. Linear drive according to claim 5 or 6, characterized in that the slide (19) acts in conjunction with tracks (18) provided on the two side flanks (17) of the guide rail (15) and formed by rod-shaped guide elements (25), in particular of hardened steel, fixed either side of the guide rail (15).

9. Linear drive according to claim 8, characterized in that the guide elements (25) are fixed in particular by rolling into longitudinal slots (26) of the guide rail (15).

10. Linear drive according to any of claims 1 to 9, characterized in that the housing (1), including the guide rail (15) where provided, is made of aluminium material.

11. Linear drive according to any of claims 5 to 10, characterized in that a screw passage (34) is located in the area of the guide rail (15).

12. Linear drive according to claim 11, characterized in that the fastening surface (33) is formed by the outer surface of the guide rail (15) which faces away from the housing (1).

13. Linear drive according to any of claims 1 to 12, characterized in that it is designed as a rodless linear drive, wherein the housing (1) has a longitudinal slot (9) through which passes a driver (14) connecting the drive section (7) to the slide (19).

14. Linear drive according to claim 13, characterized in that, viewed in cross-section, the housing (1) has a rectangular and in particular square external contour, wherein the guide rail (15) is located on one of the two outer surfaces running at right-angles to the outer surface (12) penetrated by the longitudinal slot (9).

## Revendications

1. Dispositif d'entraînement linéaire comportant un boîtier allongé (1) dans la paroi duquel est formé au moins un canal à vis (34) s'étendant longitudinalement et totalement fermé périphériquement, qui présente deux parois de canal (35, 35') opposées, à distance l'une de l'autre et s'étendant à angle droit par rapport à une surface de fixation (33) extérieure du boîtier (1), lesquelles parois sont pourvues chacune d'une denture (37) qui s'étend dans le sens de la profondeur (36) du canal à vis (34) et dont les reliefs et renfoncements successifs s'étendent dans la direction longitudinale du canal à vis (34), et le canal à vis peut être percé à partir du côté de la surface de fixation (33) pour visser à l'intérieur de celui-ci une vis de fixation (38).

2. Dispositif d'entraînement linéaire selon la revendication 1, caractérisé en ce qu'il est prévu un marquage de perçage (49) qui s'étend parallèlement au canal à vis (34) ainsi que dans un plan (48) qui traverse le canal à vis (34) dans le sens de la profondeur (36).

3. Dispositif d'entraînement linéaire selon la revendication 2, caractérisé en ce que le marquage de perçage (49) est formé par un renfoncement longitudinal (49') du type gorge ou rainure.

4. Dispositif d'entraînement linéaire selon l'une des revendications 1 à 3, caractérisé en ce que le boîtier (1) est réalisé en tant que composant extrudé.

5. Dispositif d'entraînement linéaire selon l'une des revendications 1 à 4, caractérisé en ce que dans le boîtier (1) est monté un élément d'entraînement (7) déplaçable longitudinalement et à l'extérieur du boîtier (1) est prévu un rail de guidage (15) en relief, s'étendant dans la direction longitudinale (4), sur lequel est guidé déplaçable longitudinalement un chariot (19) accouplé en déplacement axial avec l'élément d'entraînement (7).

6. Dispositif d'entraînement linéaire selon la revendication 5, caractérisé en ce que le rail de guidage (15) est un composant du boîtier (1) directement venu de moulage d'une seule pièce pendant l'extrusion du boîtier (1).

7. Dispositif d'entraînement linéaire selon la revendication 5 ou 6, caractérisé en ce que le chariot (19) coopère avec des voies de guidage (18) prévues sur les deux flancs latéraux (17) du rail de guidage (15) et qui sont formées directement par les surfaces latérales s'étendant longitudinalement du rail de guidage (15).

8. Dispositif d'entraînement linéaire selon la revendication 5 ou 6, caractérisé en ce que le chariot (19) coopère avec des voies de guidage (18) prévues sur les deux flancs latéraux (17) du rail de guidage (15) et qui sont formées par des éléments de guidage (25) en forme de barres, notamment en acier trempé, fixés des deux côtés du rail de guidage (15).

9. Dispositif d'entraînement linéaire selon la revendication 8, caractérisé en ce que les éléments de guidage (25) sont fixés, notamment par laminage, dans des rainures longitudinales (26) du rail de guidage (15).

10. Dispositif d'entraînement linéaire selon l'une des revendications 1 à 9, caractérisé en ce que le boîtier (1), y compris le rail de guidage (15) éventuellement prévu, est en matériau à base d'aluminium.

11. Dispositif d'entraînement linéaire selon l'une des revendications 5 à 10, caractérisé en ce qu'un canal à vis (34) est disposé dans la zone du rail de guidage (15).

12. Dispositif d'entraînement linéaire selon la revendication 11, caractérisé en ce que la surface de fixation (33) est formée par la surface extérieure du rail de guidage (15), tournée à l'opposé du boîtier (1).

13. Dispositif d'entraînement linéaire selon l'une des revendications 1 à 12, caractérisé en ce qu'il est conformé en dispositif d'entraînement linéaire sans tige de piston, le boîtier (1) présentant une fente longitudinale (9) qui est traversée par un entraîneur (14) reliant l'élément d'entraînement (7) au chariot (19).

14. Dispositif d'entraînement linéaire selon la revendication 13, caractérisé en ce que la section du boîtier (1) présente un contour rectangulaire et notamment carré, le rail de guidage (15) se trouvant sur l'une des deux surfaces extérieures qui s'étendent perpendiculairement à la surface extérieure (12) traversée par la fente longitudinale (9).
